(19) Europäisches Patentamt
European Patent Office
Office européen des brevets

(11) Veröffentlichungsnummer : **0 235 088 B1**

# (12) EUROPÄISCHE PATENTSCHRIFT

(45) Veröffentlichungstag der Patentschrift : **13.12.89**

(51) Int. Cl.[4] : **C 08 G 65/32**, D 06 P 1/607, C 07 C 87/00

(21) Anmeldenummer : **87810098.1**

(22) Anmeldetag : **19.02.87**

## (54) Maleinsäure- oder Phthalsäurehalbester von alkoxylierten Fettaminen.

(30) Priorität : **25.02.86 CH 737/86**

(43) Veröffentlichungstag der Anmeldung : **02.09.87 Patentblatt 87/36**

(45) Bekanntmachung des Hinweises auf die Patenterteilung : **13.12.89 Patentblatt 89/50**

(84) Benannte Vertragsstaaten : **BE CH DE ES FR GB IT LI**

(56) Entgegenhaltungen :
**EP-A- 0 014 689**
**EP-A- 0 074 923**
**EP-A- 0 102 926**
**BE-A- 686 619**
**DE-A- 2 802 305**
**GB-A- 888 661**

(73) Patentinhaber : **CIBA-GEIGY AG**
**Klybeckstrasse 141**
**CH-4002 Basel (CH)**

(72) Erfinder : **Töpfl, Rosemarie**
**Dorneckstrasse 68**
**CH-4143 Dornach (CH)**

**EP 0 235 088 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft Maleinsäure- oder Phthalsäurehalbester von alkoxylierten Fettaminen, die vorwiegend als Egalisiermittel verwendet werden.

Konventionelle für 1 : 2 Metallkomplexfarbstoffe übliche Wollegalisiermittel sind in der Regel für Reaktivfarbstoffe zu wenig wirksam. Andererseits führen die für Reaktivfarbstoffe üblichen Färbereihilfsmittel den 1 : 2-Metallkomplexfarbstoff zu Ausfällungen und/oder zu einem Drainingseffekt. Ferner haben beide genannten Färbereihilfsmittel noch den Nachteil störenden Schaum zu bilden, was durch den Zusatz von Antischaumitteln kompensiert werden muss.

Ziel und Aufgabenstellung der Erfindung bestehen darin, Egalisiermittel für das Färben von Wolle oder Fasergemischen aus Wolle und synthetischem Polyamid bereitzustellen, wobei diese Egalisiermittel kein störendes Schäumen bewirken und das gleichzeitige Färben mit üblichen Wollfarbstoffen zusammen mit wasserlöslichen Reaktivfarbstoffen ermöglichen.

Die erfindungsgemässen Säurehalbester entsprechen der Formel

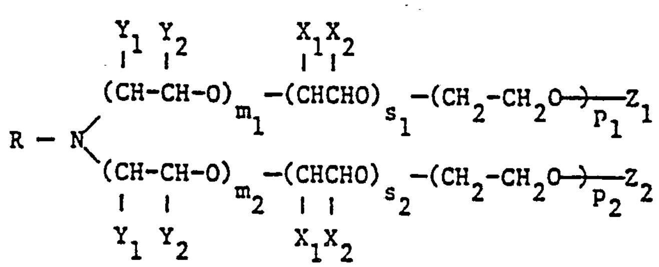

(1)

worin

R einen aliphatischen Rest mit 16 bis 24 Kohlenstoffatomen, vorzugsweise 18 bis 22 Kohlenstoffatomen,

von $Y_1$ und $Y_2$ eines Wasserstoff und das andere Phenyl,

von $X_1$ und $X_2$ eines Wasserstoff und das andere Methyl,

von $Z_1$ und $Z_2$ eines Wasserstoff und das andere den Maleinsäurerest oder den Phthalsäurerest,

$m_1$ und $m_2$ 0 oder 1 und

$s_1$, $s_2$, $p_1$ und $p_2$ ganze Zahlen bedeuten,

wobei die Summe von $s_1 + s_2$ 5 bis 12, vorzugsweise 5 bis 10 und die Summe von $p_1 + p_2$ 5 bis 30, vorzugsweise 8 bis 25, betragen.

Dabei sind die Maleinsäurehalbester bevorzugt.

In der Formel (1) bedeutet R vorzugsweise einen Alkyl- oder Alkenylrest mit 16 bis 24 Kohlenstoffatomen, besonders 16 bis 22 Kohlenstoffatomen und vor allem den Behenylrest. Diese Kohlenwasserstoffreste sind direkt gebunden. Sie können jedoch auch über eine $-O-CH_2$-Gruppe an die Aminogruppe gebunden sein. $m_1$ und $m_2$ sind vorzugsweise beide 0 oder nur eines von $m_1$ und $m_2$ ist 1. Die Summe von $s_1 + s_2$ ist vorzugsweise 5 bis 10, während die Summe von $p_1 + p_2$ vorzugsweise 8 bis 25 ist. Der Maleinsäurerest oder Phthalsäurerest ist über eine Esterbrücke $-CO-O-$ mit der endständigen Ethoxyeinheit gebunden. Die zweite Carboxylgruppe kann in freier Form oder in Salzform z. B. Alkalimetall-, Ammonium- oder Aminsalz vorliegen.

Bedeutet R Alkyl, so handelt es sich um Reste, wie z. B. Palmityl, Heptadecyl, Stearyl, Arachidyl oder vor allem Behenyl. Als Alkenylreste für R kommen z. B. Dodecenyl, Hexadecenyl, Octadecenyl(Oleyl) oder Octadecadienyl in Betracht. Dabei kann R auch der Kohlenwasserstoffrest der Palmkernfettsäuren oder Talgfettöle sein.

Die Herstellung der erfindungsgemässen Säureester erfolgt nach an sich bekannten Methoden durch Veresterung an einer endständigen Gruppe der Formel

$$-CH_2-CH_2-OH$$

des definitionsgemassen alkoxylierten Fettamins mit einem funktionellen Maleinsäure- oder Phthalsäurederivat, wie z. B. Maleinsäureanhydrid bzw. Phthalsäureanhydrid. Dabei können auch geringe Teile der unveresterten und/oder der diveresterten alkoxylierten Fettamine im Endprodukt vorhanden sein.

Die Veresterung wird zweckmässig durch einfaches Vermischen der Reaktionskomponenten vorzugsweise bei einer Temperatur von 50 bis 100 °C durchgeführt.

Die alkoxylierten Fettamine werden dadurch hergestellt, dass man die aliphatischen Amine, deren Alkyl- oder Alkenylreste 16 bis 24 Kohlenstoffatome aufweisen, alternierend mit 5 bis 12 Mol Propylenoxid und 5 bis 30 Mol Ethylenoxid oder mit 1 bis 2 Mol Styroloxid, 5 bis 12 Mol Propylenoxid und 5 bis 30 Mol Ethylenoxid umsetzt.

Die aliphatischen Amine, die als Ausgangsstoffe für die Herstellung der Säurehalbester der Formel (1) benötigt werden, können gesättigte oder ungesättigte, verzweigte oder unverzweigte Kohlenwasserstoffreste aufweisen. Die Amine können chemisch einheitlich sein oder in Form von Gemischen in Betracht kommen. Als Amingemische werden vorzugsweise solche herangezogen, wie sie bei der Ueberführung von natürlichen Fetten oder Oelen, z. B. Talgfett, Sojaöl oder Palmöl, in die entsprechenden Amine entstehen. Als Amine seien im einzelnen Hexadecylamin, Heptadecylamin, Octadecylamin, Talgfettamin, Arachidylamin, Behenylamin, Lignocerylamin, Octadecenylamin (Oleylamin) und Erucylamin sowie Gemische dieser Amine, wie z. B. Gemische aus Behenylamin und Arachidylamin, genannt.

Bevorzugt sind Säurehalbester der Formel

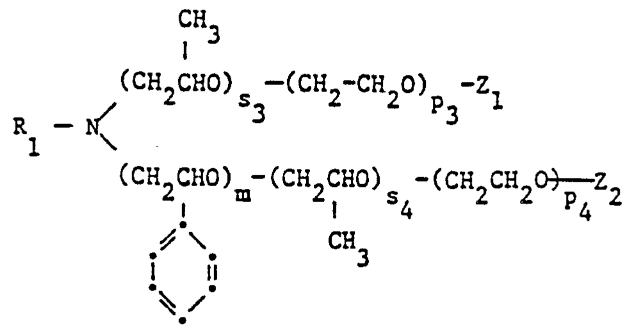

(2)

worin

$R_1$ Alkyl oder Alkenyl je mit 16 bis 24 Kohlenstoffatomen,

von $Z_1$ und $Z_2$ eines Wasserstoff und das andere den Maleinsäurerest oder den Phthalsäurerest,

m 0 oder 1 und $s_3$, $s_4$, $p_3$ und $p_4$ ganze Zahlen bedeuten, wobei die Summe von $s_3 + s_4$ 5 bis 10 und die Summe von $p_3 + p_4$ 8 bis 25 betragen. m ist vorzugsweise 0.

Unter den Säurehalbestern der Formel (2) sind die Maleinsäurehalbester bevorzugt.

Die neuen Säurehalbester eignen sich für die verschiedensten Zwecke in der Textilapplikation. Insbesondere finden sie Verwendung als Hilfsmittel beim Färben von wollhaltigen Fasermaterialien mit anionischen Farbstoffen oder Farbstoffgemischen.

Gegenstand vorliegender Erfindung ist demnach auch ein Verfahren zum Färben von wollhaltigem Fasermaterial mit anionischen Farbstoffen, welches dadurch gekennzeichnet ist, dass man dieses Material vor oder während des Färbens mit einer Zubereitung behandelt, welche einen Säurehalbester der Formel (1) und insbesondere die Verbindungen der Formel (2) enthält.

Die Einsatzmengen, in denen die Säurehalbester der Formel (1) oder (2) den Färbebädern zugesetzt werden, bewegen sich zweckmässigerweise zwischen 0,1 und 5 Gew.%, vorzugsweise 0,2 bis 3 Gew.%, bezogen auf das zu färbende Wollmaterial.

Als wollhaltiges Fasermaterial sind Wolle allein oder Mischungen aus Wolle/Polyester oder insbesondere Wolle/Polyamid zu erwähnen. Als synthetisches Polyamid kommt z. B. solches aus Adipinsäure und Hexamethylendiamin (Polyamid 6,6), aus ε-Caprolactam (Polyamid 6), aus ω-Aminoundecansäure (Polyamid 11), aus ω-Aminoönanthsäure (Polyamid 7), aus ω-Amino-pelargonsäure (Polyamid 8) oder aus Sebacinsäure und Hexamethylendiamin (Polyamid 6,10) in Betracht.

Das Fasermaterial kann in den verschiedensten Verarbeitungsstadien vorliegen. Beispielsweise kommen in Betracht: Flocke, Kammzug, Gewebe, Gewirke, Vliesstoffe, Garn oder Stückware.

Bei den anionischen Farbstoffen handelt es sich beispielsweise um Salze schwermetallhaltiger oder metallfreier Azomethin-, Mono-, Dis- oder Polyazofarbstoffe einschliesslich der Formazanfarbstoffe sowie der Anthrachinon-, Xanthen-, Nitro-, Triphenylmethan-, Naphthochinonimin- und Phthalocyaninfarbstoffe. Der anionische Charakter dieser Farbstoffe kann durch Metallkomplexbildung allein und/oder vorzugsweise durch saure, salzbildende Substituenten, wie Carbonsäuregruppen, Schwefelsäureestergruppen, Phosphonsäureestergruppen, Phosphonsäuregruppen oder Sulfonsäuregruppen bedingt sein. Diese Farbstoffe können im Molekül auch sogenannte reaktive Gruppierungen, welche mit dem zu färbenden Material eine kovalente Bindung eingehen, aufweisen. Bevorzugt sind saure metallfreie Reaktivfarbstoffe, welche vorzugsweise mindestens zwei Sulfonsäuregruppen aufweisen.

Von besonderem Interesse sind auch die 1 : 1- oder vorzugsweise 1 : 2-Metallkomplexfarbstoffe. Die 1 : 1-Metallkomplexfarbstoffe weisen vorzugsweise eine oder zwei Sulfonsäuregruppen auf. Als Metall enthalten sie ein Schwermetallatom, wie z. B. Kupfer, Nickel oder insbesondere Chrom. Die 1 : 2-Metallkomplexfarbstoffe enthalten als Zentralatom ein Schwermetallatom, wie z. B. ein Kobaltatom oder insbesondere ein Chromatom. Mit dem Zentralatom sind zwei komplexbildende Komponenten verbunden, von denen mindestens eine ein Farbstoffmolekül ist, vorzugsweise jedoch beide Farbstoffmolküle sind. Dabei können die beiden an der Komplexbildung beteiligten Farbstoffmoleküle gleich oder voneinander verschieden sein. Die 1 : 2-Metallkomplexfarbstoffe können z. B. zwei Azomethinmoleküle, einen Disazofarbstoff und einen Monoazofarbstoff oder vorzugsweise zwei Monoazofarbstoffmoleküle

enthalten. Die Azofarbstoffmoleküle können wasserlöslichmachende Gruppen aufweisen, wie z. B. Säureamid-, Alkylsulfonyl- oder die obengenannten sauren Gruppen. Bevorzugt sind 1 : 2-Kobalt- oder 1 : 2-Chromkomplexe von Monoazofarbstoffen, die Säureamidgruppen, Alkylsulfonylgruppen oder insgesamt eine einzige Sulfonsäuregruppe aufweisen.

Von besonderem Interesse sind 1 : 2-Chrommischkomplexe von Azofarbstoffen, die eine Sulfonsäuregruppe aufweisen.

Es können auch Mischungen der anionischen Farbstoffe eingesetzt werden. Beispielsweise können Farbstoffmischungen von mindestens 2 oder 3 anionischen Farbstoffen zur Herstellung egaler Bichromie- oder Trichromiefärbungen verwendet werden. Besonders bevorzugt sind Farbstoffmischungen, welche einen Reaktivfarbstoff mit mindestens zwei Sulfonsäuregruppen und einen 1 : 2-Metallkomplexfarbstoff enthalten. Das Mischungsverhältnis kann von 9 : 1 bis 1 : 9 variieren.

Die Menge der der Flotte zugesetzten Farbstoffe richtet sich nach der gewünschten Farbtiefe. Im allgemeinen haben sich Mengen von 0,1 bis 10, insbesondere 0,1 bis 5 Gewichtsprozent, bezogen auf das eingesetzte Fasermaterial, bewährt.

Die Färbebäder können Mineralsäuren, wie Schwefelsäure oder Phosphorsäure, organische Säuren, zweckmässig niedere, aliphatische Carbonsäuren, wie Ameisen-, Essig- oder Oxalsäure und/oder Salze, wie Ammoniumacetat, Ammoniumsulfat oder Natriumacetat enthalten. Die Säuren dienen vor allem der Einstellung des pH-Wertes der Flotten, der in der Regel 4 bis 7, vorzugsweise 5 bis 6, beträgt. Sofern die erfindungsgemässen-Säurehalbester vor dem Färben appliziert werden, soll, die Säure oder das Puffergemisch zweckmässig der Vorbehandlungsflotte zugesetzt werden.

Bei Verwendung von Reaktivfarbstoffen werden den Färbeflotten nachträglich in der Regel Fixieralkalien, wie z. B. wässeriges Ammoniak, Alkalimetallhydroxide, Alkalimetallcarbonate oder -hydrogencarbonate zugegeben. Der pH-Wert der Alkali enthaltenden Färbebäder beträgt in der Regel 7,5 bis 9, vorzugsweise 8 bis 8,5.

Die Färbebäder können weitere übliche Zusätze, wie z. B. Elektrolyte, Wollschutz-, Dispergier- und Netzmittel enthalten. Entschäumer, wie z. B. Silikonöle, werden hingegen nicht benötigt.

Vorzugsweise enthalten die Färbebäder oder Vorbehandlungsflotten neben den erfindungsgemässen amphoteren Maleinsäurehalbestern oder Phthalsäurehalbestern Hydrotropierungskomponenten. Bei diesen Zusätzen handelt es sich vorzugsweise um nichtionogene Tenside, welche bevorzugt Anlagerungsprodukte von 30 bis 200, vorzugsweise 30 bis 100 Mol Ethylenoxid an 1 Mol eines aliphatischen Monoalkohols mit 12 bis 22 Kohlenstoffatomen oder an 1 Mol eines Alkylphenols mit 4 bis 12, C-Atomen im Alkylteil sind. Ein typischer Vertreter dieser Tenside sind das Anlagerungsprodukt von 80 Mol Ethylenoxid an 1 Mol Oleylalkohol, das Anlagerungsprodukt von 35 Mol Ethylenoxid an 1 Mol Nonylphenol, das Anlagerungsprodukt von 200 Mol Ethylenoxid an 1 Mol Dihydroabietylalkohol oder das Anlagerungsprodukt von 35 Mol Ethylenoxid an 1 Mol Sojaöl. Das Gewichtsverhältnis des Säurehalbesters zu diesen Addukten bewegt sich mit Vorteil zwischen 2 : 1 oder 1 : 1 bis 1 : 4, vorzugsweise 1 : 1 bis 1 : 2.

Die Färbungen erfolgen mit Vorteil aus wässeriger Flotte nach dem Ausziehverfahren. Das Flottenverhältnis kann dementsprechend innerhalb eines weiten Bereiches gewählt werden, z. B. 1 : 3 bis 1 : 100, vorzugsweise 1 : 10 bis 1 : 50. Man färbt zweckmässig bei einer Temperatur von 60 bis 125 °C, vorzugsweise 80 bis 98 °C.

Die Färbedauer kann in Abhängigkeit von den Erfordernissen variieren, beträgt jedoch in der Regel 30 bis 120 Minuten.

Besondere Vorrichtungen sind beim erfindungsgemässen Verfahren nicht erforderlich. Es können die üblichen Färbeapparate, wie beispielsweise offene Bäder, Jigger, Paddel- oder Düsenapparate, Zirkulationsapparate oder Haspelkufen verwendet werden.

Das Färben des Fasermaterials wird zweckmässig so durchgeführt, dass man das Färbegut mit einer wässerigen Flotte, die Säure und den Säurehalbester, vorzugsweise den Maleinhalbester enthält, behandelt und im gleichen Bade nach Zugabe des Farbstoffes färbt. Vorzugsweise geht man mit dem wollhaltigen Fasermaterial in eine Flotte ein, die Säure, den Säurehalbester und Farbstoff bzw. Farbstoffmischungen enthält und eine Temperatur von 40 bis 60 °C aufweist. Hierauf steigert man die Temperatur langsam, um im angegebenen Temperaturbereich von 15 bis 90 Minuten, vorzugsweise 30 bis 60 Minuten, zu färben. Bei Verwendung von Reaktivfarbstoffen wird das Färbegut noch 10 bis 20 Minuten alkalisch bei 70 bis 90 °C behandelt. Am Schluss wird das gefärbte Material herausgezogen und wie üblich gespült und getrocknet.

Durch die Anwesenheit des erfindungsgemässen Maleinsäurehalbesters oder Phthalsäurehalbesters tritt während des Färbeprozesses kein störendes Schäumen auf.

Man erhält nach dem erfindungsgemässen Färbeverfahren gleichmässige und farbkräftige Färbungen,. die sich auch durch gute Reibechtheiten und Farbausbeuten auszeichnen. Zudem werden die anderen Echtheiten der Färbungen, wie z. B. Lichtechtheit und Nassechtheiten durch den Einsatz des neuen Säurehalbesters allein oder in Kombination mit Hydrotropierungskomponenten nicht negativ beeinflusst. Ferner wird eine vollständige Erschöpfung des Färbebades ohne Farbstoffausfällungen erreicht. Eine Spülung vor dem Trocknen des Materials ist zudem nicht immer erforderlich.

In den nachfolgenden Beispielen sind die Teile Gewichtsteile und die Prozente Gewichtsprozente.

## Herstellungsbeispiele

### Beispiel 1

29,6 g Phthalsäureanhydrid und 0,23 g Tributylamin werden zu 219,6 g eines Umsetzungsproduktes aus 1 Mol Behenylamin, 6 Mol Propylenoxyd und 10 Mol Ethylenoxyd gegeben, worauf das Gemisch 6 Stunden bei 100 °C gerührt wird. Danach wird die Säurezahl bestimmt (SZ = 48) und das Produkt mit 249 g Wasser verdünnt. Man erhält 498 g einer braunen, viskosen Lösung, die 50 % des Phthalsäurehalbesters der Formel

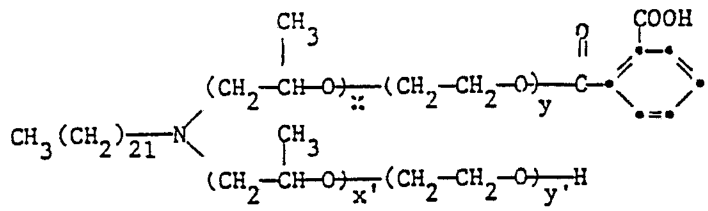

(11)

enthält, worin x + x' = 6 und y + y' = 10 sind.

Das Produkt ist mit Wasser unbegrenzt mischbar. Der pH-Wert beträgt 5,7.

### Beispiel 2

19,6 g Maleinsäureanhydrid und 0,1 g Tributylamin werden zu 219,6 g eines Umsetzungsproduktes aus 1 Mol Behenylamin, 6 Mol Propylenoxyd und 10 Mol Ethylenoxyd gegeben und 6 Stunden bei 100 °C gerührt. Danach wird die Säurezahl bestimmt (SZ = 47) und das Produkt mit 239 g Wasser verdünnt. Man erhält 478 g einer hellbraunen, viskosen Lösung, die 50 % des Maleinsäurehalbesters der Formel

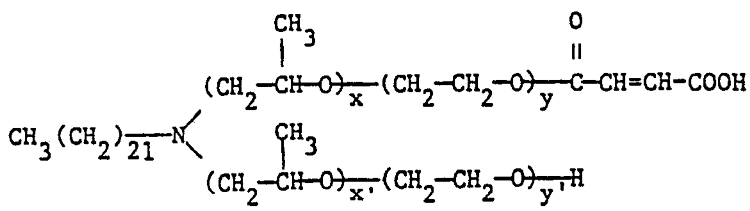

(12)

enthält, worin x + x' = 6 und y + y' = 10 sind. Das Produkt ist mit wasser unbegrenzt mischbar, der pH-Wert beträgt 5,7.

### Beispiel 3

14,8 g Phthalsäureanhydrid und 0,14 g Tributylamin werden zu 153,9 g eines Umsetzungsproduktes aus 1 Mol Behenylamin, 6 Mol Propylenoxyd und 20 Mol Ethylenoxyd gegeben und 6 Stunden bei 100 °C gerührt. Danach wird die Säurezahl bestimmt (SZ = 35) und das Produkt mit 168 g Wasser verdünnt. Man erhält 336 g einer braunen, viskosen Lösung, die 50 % des Phthalsäurehalbesters folgender Formel

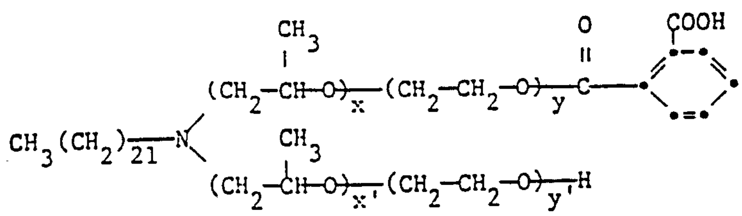

(13)

enthält, worin x + x' = 6 und y + y' = 20 sind. Das Produkt ist mit Wasser unbegrenzt mischbar, der pH-Wert beträgt 5,6.

### Beispiel 4

14,7 g Maleinsäureanhydrid und 0,1 g Tributylamin werden zu 198 g eines Umsetzungsproduktes aus 1 Mol Behenylamin, 6 Mol Propylenoxyd und 15 Mol Ethylenoxyd gegeben und 6 Stunden bei 100 °C gerührt. Danach wird die Säurezahl bestimmt (SZ = 41) und das Produkt mit 212 g Wasser verdünnt. Man erhält 424 g einer braunen, viskosen Lösung, die 50 % des Maleinsäurehalbesters der Formel

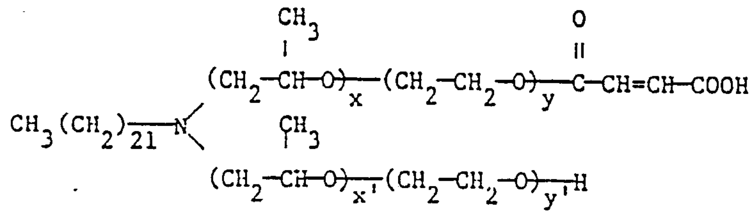

(14)

enthält, worin x + x' = 6 und y + y' = 15 sind.

Das Produkt ist mit Wasser unbegrenzt mischbar, der pH-Wert beträgt 5,3.

Beispiel 5

22,2 g Phthalsäureanhydrid und 0,2 g Tributylamin werden zu 198 g eines Umsetzungsproduktes aus 1 Mol Behenylamin, 6 Mol Propylenoxyd und 15 Mol Ethylenoxyd gegeben, worauf das Gemisch 6 Stunden bei 100 °C gerührt wird. Danach wird die Säurezahl bestimmt (SZ = 41) und das Produkt mit 220 g Wasser verdünnt. Man erhält 440 g einer braunen, viskosen Lösung, die 50 % des Phthalsäurehalbesters der Formel

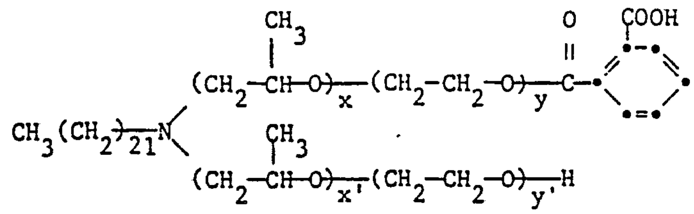

(15)

enthält, worin x + x' = 6 und y + y' = 15 sind.

Das Produkt ist mit Wasser unbegrenzt mischbar der pH-Wert beträgt 5,1.

Beispiel 6

14,7 g Maleinsäureanhydrid und 0,1 g Tributylamin werden zu 248 g eines Umsetzungsproduktes aus 1 Mol Behenylamin, 8 Mol Propylenoxyd und 20 Mol Ethylenoxyd gegeben und 6 Stunden bei 100 °C gerührt. Danach wird die Säurezahl bestimmt (SZ = 34) und das Produkt mit 262 g Wasser verdünnt. Man erhält 524 g einer hellbraunen, viskosen Lösung, die 50 % des Maleinsäurehalbesters der Formel

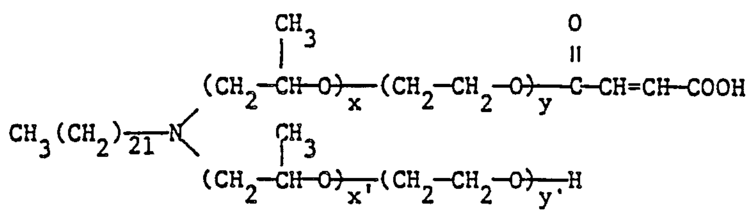

(16)

enthält, worin x + x' = 8 und y + y' = 20 sind. Das Produkt ist mit Wasser unbegrenzt mischbar, der pH-Wert beträgt 6,0.

Beispiel 7

19,2 g Phthalsäureanhydrid und 0,23 g Tributylamin werden zu 215 g eines Umsetzungsproduktes aus 1 Mol Behenylamin, 8 Mol Propylenoxyd und 20 Mol Ethylenoxyd gegeben und 6 Stunden bei 100 °C gerührt. Danach wird die Säurezahl bestimmt (SZ = 35) und das Produkt mit 234 g Wasser verdünnt. Man erhält 468 g einer braunen, viskosen Lösung, die 50 % des Phthalsäurehalbesters der Formel

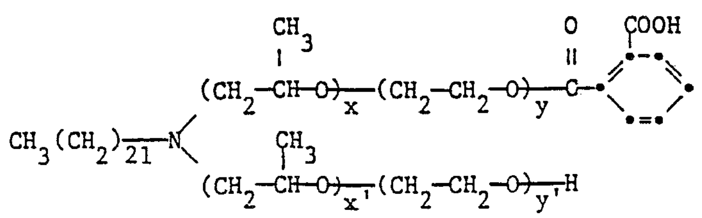

(17)

enthält, worin x + x' = 8 und y + y' = 20 sind.

Das Produkt ist unbegrenzt mit Wasser mischbar, der pH-Wert beträgt 6,0.

Beispiel 8

9,8 g Maleinsäureanhydrid und 0,1 g Tributylamin werden zu 155,5 g eines Umsetzungsproduktes aus einem Fettamingemisch (bestehend aus 30 % Palmitylamin, 30 % Stearylamin und 40 % Oleylamin), 7 Mol Propylenoxyd und 20 Mol Ethylenoxyd gegeben und 6 Stunden bei 100 °C gerührt. Danach wird die Säurezahl bestimmt (SZ = 32) und das Produkt mit 165 g Wasser verdünnt. Man erhält 330 g einer hellbraunen, leicht viskosen Lösung, die 50 % des Maleinsäurehalbesters der Formel

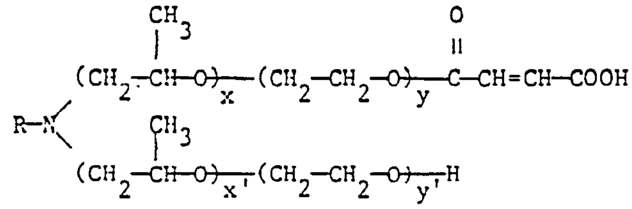

(18)

R = 30 % Palmityl, 30 % Stearyl, 40 % Oleyl
enthält, worin x + x' = 7 und y + y' = 20 sind.

Das Produkt ist unbegrenzt mit Wasser mischbar, der pH-Wert beträgt 5,6.

Beispiel 9

7,4 g Maleinsäureanhydrid und 0,06 g Tributylamin werden zu 120 g eines Umsetzungsproduktes aus 1 Mol Behenylamin, 1 Mol Styroloxyd, 5 Mol Propylenoxyd und 20 Mol Ethylenoxyd gegeben, worauf das Gemisch 6 Stunden bei 100 °C gerührt wird. Danach wird die Säurezahl bestimmt (SZ = 33) und das Produkt mit 127,5 g Wasser verdünnt. Man erhält 254 g einer braunen, viskosen Lösung, die 50 % des Maleinsäurehalbesters der Formel

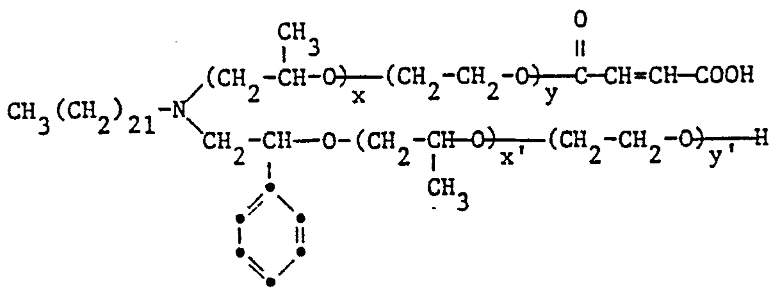

(19)

enthält, worin x + x' = 5 und y + y' = 20 sind.

Das Produkt ist mit Wasser unbegrenzt mischbar, der pH-Wert beträgt 5.4.

Beispiel 10

4,9 g Maleinsäureanhydrid und 0,05 g Tributylamin werden zu 120,4 g eines Umsetzungsproduktes aus 1 Mol eines Fettamingemisches (bestehend aus 30 % Palmityl-, 30 % Stearyl und 40 % Oleylamin), 1 Mol Styroloxyd, 12 Mol Propylenoxyd und 30 Mol Ethylenoxyd gegeben und 6 Stunden bei 100 °C gerührt. Danach wird die Säurezahl bestimmt (SZ = 23) und das Produkt mit 125 g Wasser verdünnt. Man erhält 250 g einer hellbraunen, leicht viskosen Lösung, die 50 % des Maleinsäurehalbesters der Formel

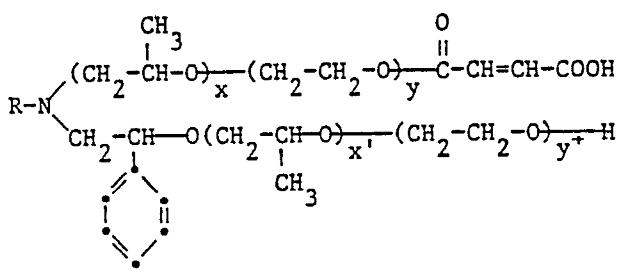

(20)

R = 30 % Palmityl-, 30 % Stearyl-, 40 % Oleylenthält, worin x + x' = 12 und y + y' = 30 sind.

Das Produkt ist mit Wasser unbegrenzt mischbar, der pH-Wert beträgt 5,9.

Beispiel 11

11,1 g Phthalsäureanhydrid und 0,13 g Tributylamin werden zu 120 g eines Umsetzungsproduktes aus 1 Mol Behenylamin, 1 Mol Styroloxyd, 5 Mol Propylenoxyd und 20 Mol Ethylenoxyd gegeben, worauf das Gemisch 6 Stunden bei 100 °C gerührt wird. Danach wird dünnt. Man erhält 262 g einer hellbraunen, viskosen Lösung die 50 % des Phthalsäurehalbesters der Formel

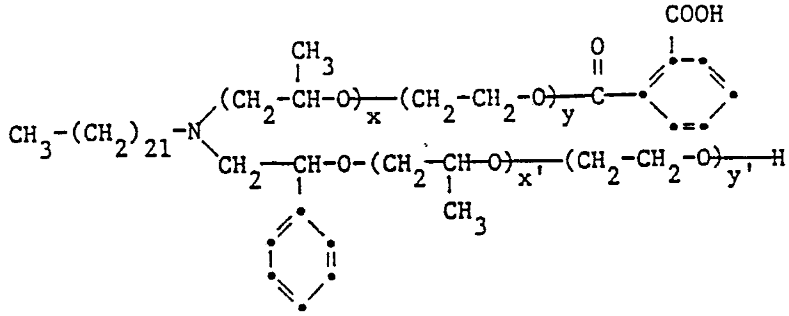

(21)

enthält, worin x + x' = 5 und y + y' = 20 sind.

Das Produkt ist mit Wasser unbegrenzt mischbar, der PH-Wert beträgt 5,6.

Beispiel 12

7,4 g Phthalsäureanhydrid und 0,13 g Tributylamin werden zu 120,4 g eines Umsetzungsproduktes aus 1 Mol eines Fettamingemisches (bestehend aus 30 % Palmityl-, 30 % Stearyl- und 40 Oleylamin), 1 Mol Styroloxyd, 12 Mol Propylenoxyd und 30 Mol Ethylenoxyd gegeben und 6 Stunden bei 100° C gerührt. Danach wird die Säurezahl bestimmt (SZ = 22) und das Produkt mit 127 g Wasser verdünnt. Man erhält 254 g einer braunen, viskosen Lösung, die 50 % des Phthalsäurehalbesters der Formel

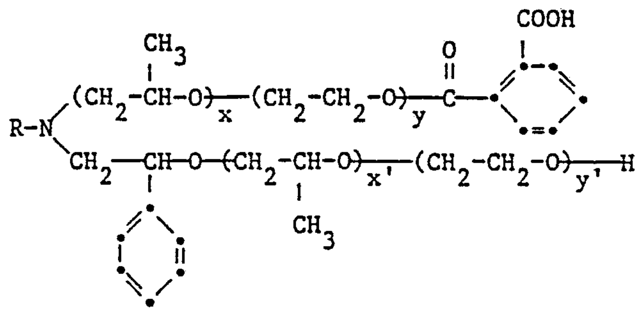

(22)

enthält, worin x + x' = 12 und y + y' = 30 sind und

R 30 % Palmityl-, 30 % Stearyl- und 40 % Oleyl- bedeutet.

Das Produkt ist mit Wasser unbegrenzt mischbar, der pH-Wert beträgt 5,9.

Anwendungsbeispiele

Beispiel 1

100 kg Wollgewebe werden auf einer Haspelkufe mit einer Flotte aus 4 000 Liter Wasser von 40 °C eingenetzt, welche folgende Zusätze enthält:

4 kg Ammoniumsulfat

2 kg Essigsäure 80 %

1,5 kg einer wässrigen Zubereitung, welche 25 % des gemäss Beispiel 2 hergestellten Maleinsäurehalbesters der Formel (12) und 37,5 % des Anlagerungsproduktes von 80 Mol Ethylenoxid an 1 Mol Oleylalkohol enthält.

Alsdann erfolgt der Zusatz einer wässerigen Lösung von 3 kg des Farbstoffes der Formel

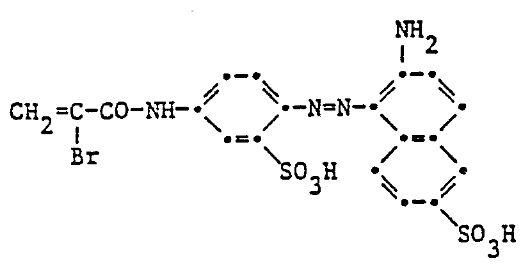

(31)

Hierauf wird die Färbeflotte im Verlauf von 30 Minuten auf Kochtemperatur erwärmt und die Ware 60 Minuten bei dieser Temperatur gehalten.

Während des ganzen Färbeprozesses tritt kein störendes Schäumen auf. Anschliessend wird das Färbebad auf 80 °C abgekühlt und der pH-Wert mit Ammoniakwasser auf 8,5 eingestellt. Nach einer Behandlungszeit von 15 Minuten bei 80 °C wird die Ware gespült und getrocknet. Man erhält eine egale rote Färbung des Wollgewebes, das keine Flecken aufweist.

Beispiel 2

100 kg Woll-Stranggarn werden in einem Zirkulationsapparat bei 40 °C mit einer Flotte aus 1 000 Liter Wasser eingenetzt, welche folgende Zusätze enthält :

1 kg Nitriumacetat

3 kg Essigsäure 80 %

5 kg Natriumsulfat

1 kg einer wässerigen Zubereitung, welche 25 % des gemäss Beispiel 1 hergestellten Phthalsäurehalbesters der Formel (11) und 37,5 % des Anlagerungsproduktes von 80 Mol Ethylenoxid an 1 Mol Oleylalkohol enthält.

Alsdann werden 3 kg eines Gemisches bestehend aus einem Farbstoff der Formel

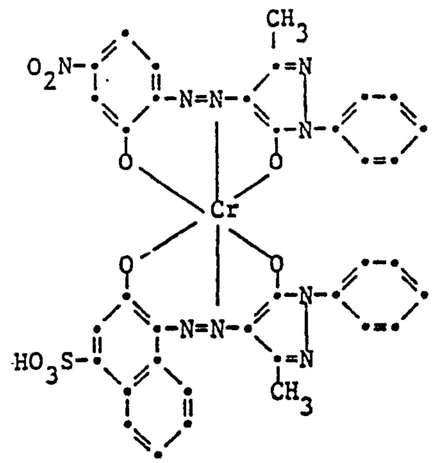

(32)

und einem 1 : 2-Kobaltkomplex des Farbstoffes der Formel

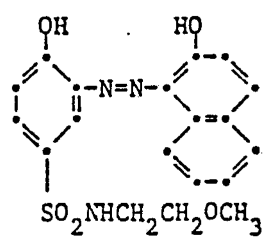

(33)

im Mischungsverhältnis 7 : 1 zugegeben.

Das Färbebad wird danach im Verlaufe von 45 Minuten auf Kochtemperatur erhitzt und das Färbegut 60 Minuten bei dieser Temperatur gehalten. Während des Färbeprozesses tritt kein störendes Schäumen auf. Alsdann wird das Färbegut gespült und getrocknet. Man erhält eine egale und echte bordeaux Färbung des Wollgarnes.

Beispiel 3

100 kg Wollserge werden in einer Haspelkufe bei 40 °C in 5 000 Litern Wasser eingenetzt. Hierauf werden folgende Zusätze zugegeben :

4 kg Ammoniumsulfat

3 kg Essigsäure 80 %

1,5 kg einer wässrigen Zubereitung, welche 25 % des gemäss Beispiel 2 hergestellten Maleinsäurehalbesters der Formel (12) und 37,5 % des Anlagerungsproduktes von 80 Mol Ethylenoxid an 1 Mol Oleylalkohol enthält

3 kg des Farbstoffes der Formel (31) und

1 kg des Farbstoffegemisches gemäss Beispiel 2,

bestehend aus dem 1 : 2-Chrommischkomplex-Farbstoff der Formel (32) und dem 1 : 2-Kobaltkomplex

des Farbstoffes der Formel (33). Hierauf wird die Färbeflotte im Verlauf von 30 Minuten auf Kochtemperatur erwärmt und die Ware 60 Minuten bei dieser Temperatur gehalten.

Während des ganzen Färbeprozesses tritt kein störendes Schäumen auf. Anschliessend wird das Färbebad auf 80 °C abgekühlt und der pH-Wert mit Ammoniakwasser auf pH 8,5 eingestellt. Nach einer Behandlungszeit von 15 Minuten bei 80 °C wird die Ware gespült und getrocknet. Man erhält eine egale und reibechte Färbung bei ausgezeichneter Baderschöpfung.

Beispiel 4

100 kg Wollgewebe werden auf einer Haspelkufe mit einer Färbeflotte gefärbt, welche in 4 000 Liter Wasser

4 kg Schwefelsäure

10 kg Natriumsulfat

3 kg einer wässerigen Zubereitung, welche 20 % des gemäss Beispiel 2 hergestellten Säurehalbesters der Formel (12) und 40 % des Anlagerungsproduktes von 35 Mol Ethylenoxid an 1 Mol Nonylphenol enthält,

2 kg des Acid Blue 158, C.I. 14 880

enthält. Man beginnt bei 70 °C mit dem Färben, lässt 10 Minuten bei dieser Temperatur zirkulieren, treibt innerhalb von 30 Minuten zum Kochen und hält das Färbebad 90 Minuten bei Kochtemperatur. Während des Färbeprozesses tritt kein störendes Schäumen auf. Hierauf wird das Bad abgekühlt und die Ware gespült und getrocknet. Man erhält eine egale Blaufärbung der Wolle.

Beispiel 5

In einem Stranggarn-Färbeapparat werden 100 kg Wollgarn bei 40 °C in 1 500 Litern Wasser eingenetzt. Hierauf werden folgende Zusätze zugegeben

0,5 kg Essigsäure 80 %ig

10 kg Natriumsulfat und

1 kg einer wässerigen Zubereitung, welche 35 % des gemäss Beispiel 1 hergestellten Säurehalbesters der Formel (11) und 30 % des Anlagerungsproduktes von 35 Mol Ethylenoxid an Sojaöl enthält.

Man lässt die Flotte 15 Minuten zirkulieren und fügt 1 kg des Farbstoffes der Formel

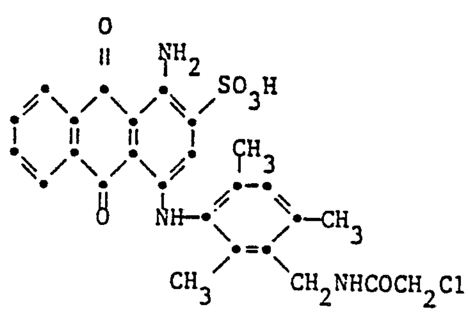

(34)

hinzu.

Die Färbeflotte wird dann im Verlaufe von 30 Minuten zum Kochen erwärmt und man färbt 30 Minuten bei dieser Temperatur. Während des ganzen Färbeprozesses tritt kein störendes Schäumen auf. Die Ware wird schliesslich gespült und getrocknet. Man erhält eine echte, brillante und egale blaue Färbung der Wolle.

Aehnliche gute Ergebnisse werden erhalten, wenn in den Anwendungsbeispielen 1, 2, 3, 4 und 5 anstelle des dort verwendeten Säurehalbesters der Formel (11) oder (12) die gleiche Menge eines der gemäss den Beispielen 3 bis 12 hergestellten Säurehalbesters der Formeln (13) bis (22) eingesetzt wird.

**Patentansprüche**

1. Malein- oder Phthalsäurehalbester der Formel

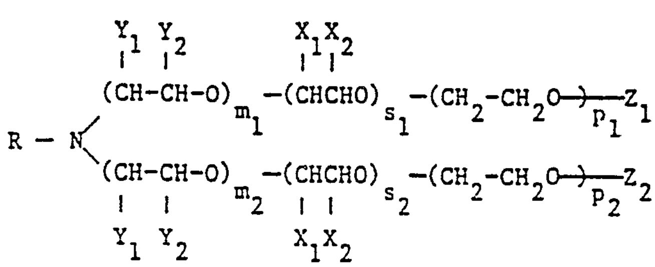

(1)

worin

R einen aliphatischen Rest mit 16 bis 24 Kohlenstoffatomen,

von $Y_1$ und $Y_2$ eines Wasserstoff und das andere Phenyl,

von $X_1$ und $X_2$ eines Wasserstoff und das andere Methyl,

von $Z_1$ und $Z_2$ eines Wasserstoff und das andere den Maleinsäurerest oder den Phthalsäurerest,

$m_1$ und $m_2$ je 0 oder 1 und

$s_1$, $s_2$, $p_1$ und $p_2$ ganze Zahlen bedeuten,

worin die Summe von $s_1 + s_2$ 5 bis 12 und die Summe von $p_1 + p_2$ 5 bis 30 betragen.

2. Säurehalbester gemäss Anspruch 1, dadurch gekennzeichnet, dass in Formel (1) R einen Alkyl- oder Alkenylrest mit 16 bis 24 Kohlenstoffatomen bedeutet.

3. Säurehalbester gemäss Anspruch 2, dadurch gekennzeichnet, dass in Formel (1) R Behenyl bedeutet.

4. Säurehalbester gemäss einem der Ansprüche 1 bis 3, dadurch gekennzeichnet, dass in Formel (1) $m_1$ und $m_2$ 0 sind oder von $m_1$ und $m_2$ nur eines 1 ist.

5. Säurehalbester gemäss einem der Ansprüche 1 bis 4, dadurch gekennzeichnet, dass in Formel (1) die Summe von $s_1 + s_2$ 5 bis 10 ist.

6. Säurehalbester gemäss einem der Ansprüche 1 bis 5, dadurch gekennzeichnet, dass in Formel (1) die Summe von $p_1 + p_2$ 8 bis 25 ist.

7. Säurehalbester gemäss Anspruch 1, dadurch gekennzeichnet, dass sie der Formel

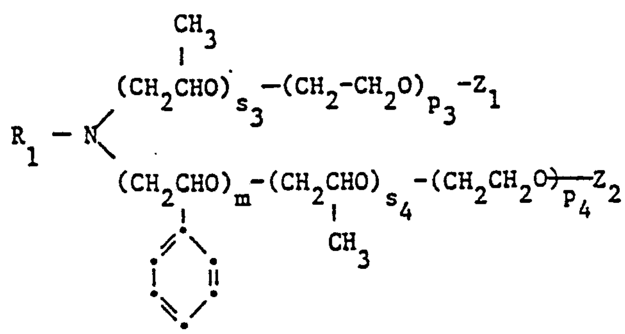

(2)

entsprechen, worin

$R_1$ Alkyl oder Alkenyl je mit 16 bis 24 Kohlenstoffatomen,

von $Z_1$ und $Z_2$ eines Wasserstoff und das andere den Maleinsäurerest oder den Phthalsäurerest,

m 0 oder 1 und

$s_3$, $s_4$, $p_3$ und $p_4$ ganze Zahlen bedeuten,

wobei die Summe von $s_3 + s_4$ 5 bis 10 und die Summe von $p_3 + p_4$ 8 bis 25 betragen.

8. Verwendung der Säurehalbester gemäss einem der Ansprüche 1 bis 7 als Hilfsmittel beim Färben von wollhaltigem Fasermaterial mit anionischen Farbstoffen.

9. Verfahren zum Färben von wollhaltigen Fasermaterialien mit anionischen Farbstoffen, dadurch gekennzeichnet, dass man diese Materialien vor oder während des Färbens mit einer wässerigen Zubereitung behandelt, welche einen Säurehalbester der Formel

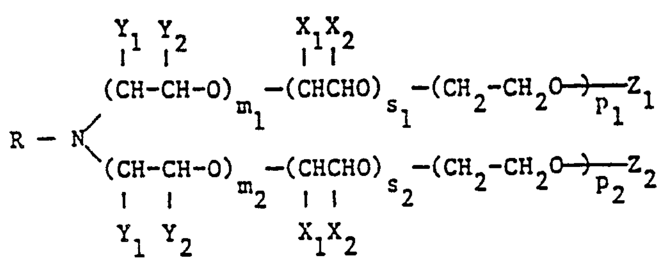

(1)

enthält worin

R einen aliphatischen Rest mit 16 bis 24 Kohlenstoffatomen,

von $Y_1$ und $Y_2$ eines Wasserstoff und das andere Phenyl,

von $X_1$ und $X_2$ eines Wasserstoff und das andere Methyl,

von $Z_1$ und $Z_2$ eines Wasserstoff und das andere den Maleinsäurerest oder den Phthalsäurerest,

$m_1$ und $m_2$ je 0 oder 1 und

$s_1$, $s_2$, $p_1$ und $p_2$ ganze Zahlen bedeuten,

worin die Summe von $s_1 + s_2$ 5 bis 12 und die Summe von $p_1 + p_2$ 5 bis 30 betragen.

10. Verfahren gemäss Anspruch 9, dadurch gekennzeichnet, dass die Zubereitung zusätzlich ein

Anlagerungsprodukt von 30 bis 200 Mol Ethylenoxid an 1 Mol eines aliphatischen Monoalkohols mit 12 bis 22 Kohlenstoffatomen oder eines Alkylphenols mit 4 bis 12 Kohlenstoffatomen im Alkylteil enthält.

11. Verfahren gemäss einem der Ansprüche 9 und 10, dadurch gekennzeichnet, dass das Färbebad 0,5 bis 3 Gewichtsprozent an Zubereitung, bezogen auf das Fasermaterial, enthält.

12. Verfahren gemäss einem der Ansprüche 9 bis 11, dadurch gekennzeichnet, dass man Reaktivfarbstoffe, die mindestens zwei Sulfonsäuregruppen enthalten, verwendet.

13. Verfahren gemäss einem der Ansprüche 9 bis 11, dadurch gekennzeichnet, dass man 1 : 2-Metallkomplexfarbstoffe verwendet.

14. Verfahren gemäss Anspruch 13, dadurch gekennzeichnet, dass man 1 : 2-Chrommischkomplexe von Azofarbstoffen verwendet, wobei die Komplexe eine einzige Sulfonsäuregruppe aufweisen.

15. Verfahren gemäss einem der Ansprüche 9 bis 11, dadurch gekennzeichnet, dass man Reaktivfarbstoffe, die mindestens zwei Sulfonsäuregruppen aufweisen, zusammen mit 1 : 2-Metallkomplexfarbstoffen verwendet.

## Claims

1. A maleic acid or phthalic acid half ester of formula

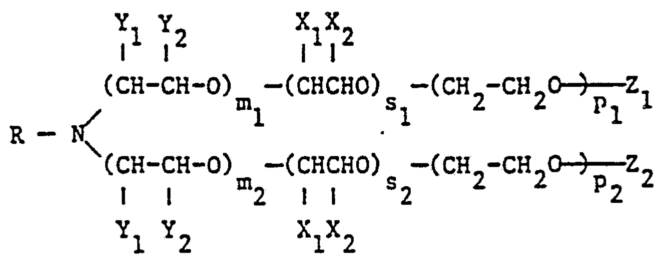

(1)

in which

R is an aliphatic radical of 16 to 24 carbon atoms, one of,

$Y_1$ and $Y_2$ is hydrogen and the other is phenyl, one of,

$X_1$ and $X_2$ is hydrogen and the other is methyl, one of,

$Z_1$ and $Z_2$ is hydrogen and the other is the maleic acid radical or the phthalic acid radical,

$m_1$ and $m_2$ are each 0 or 1, and

$s_1$, $s_2$, $p_1$ and $p_2$ are integers,

with the sum of $s_1 + s_2$ being 5 to 12 and the sum of $p_1 + p_2$ being 5 to 30.

2. An acid half ester according to claim 1, wherein in formula (1) R is an alkyl or alkenyl radical of 16 to 24 carbon atoms.

3. An acid half ester according to claim 2, wherein in formula (1) R is behenyl.

4. An acid half ester according to any one of claims 1 to 3, wherein in formula (1) $m_1$ and $m_2$ are 0 or only one of $m_1$ and $m_2$ is 1.

5. An acid half ester according to any one of claims 1 to 4, wherein in formula (1) the sum of $s_1 + s_2$ is 5 to 10.

6. An acid half ester according to anyone of claims 1 to 5, wherein in formula (1) the sum of $p_1 + p_2$ is 8 to 25.

7. An acid half ester according to claim 1 of formula

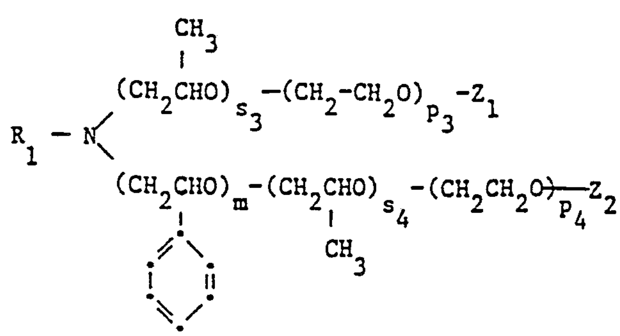

(2)

in which

$R_1$ is alkyl or alkenyl, each of 16 to 24 carbon atoms, one of,

$Z_1$ and $Z_2$ is hydrogen and the other is the maleic acid radical or the phthalic acid radical,

m is 0 or 1 and

$s_3$, $s_4$, $p_3$ and $p_4$ are integers,

with the sum of $s_3 + s_4$ being 5 to 10 and the sum of $p_3 + p_4$ being 8 to 25.

8. Use of acid half esters according to any one of claims 1 to 7 as auxiliary agents in the dyeing of wool-containing fibre material with anionic dyes.

9. A process for dyeing wool-containing fiber materials with anionic dyes, which comprises treating said materials, before or during dyeing, with an aqueous formulation which contains an acid half ester of formula

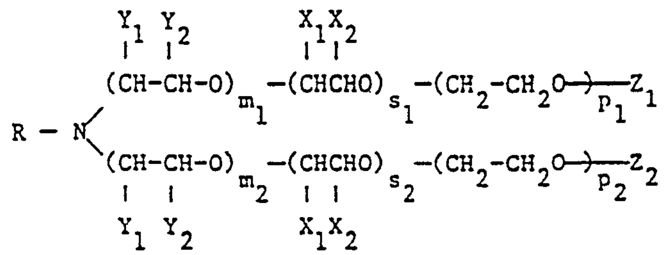

(1)

in which

R is an aliphatic radical of 16 to 24 carbon atoms, one of,

$Y_1$ and $Y_2$ is hydrogen and the other is phenyl, one of,

$X_1$ and $X_2$ is hydrogen and the other is methyl, one of in,

$Z_1$ and $Z_2$ is hydrogen and the other is the maleic acid radical or the phthalic acid radical,

$m_1$ and $m_2$ are each 0 or 1 and

$s_1$, $s_2$, $p_1$ and $p_2$ are integers,

with the sum of $s_1 + s_2$ being 5 to 12 and the sum of $p_1 + p_2$ being 5 to 30.

10. A process according to claim 9, wherein the formulation additionally contains an adduct of 30 to 200 moles of ethylene oxide and 1 mole of an aliphatic monoalcohol of 12 to 22 carbon atoms or of an alkylphenol of 4 to 12 carbon atoms in the alkyl moiety.

11. A process according to one of claims 9 and 10, wherein the dyebath contains 0.5 to 3 % by weight of the formulation, based on the fiber material.

12. A process according to any one of claims 9 to 11, wherein reactive dyes which contain at least two sulfonic acid groups are used.

13. A process according to any one of claims 9 to 11, wherein 1 : 2 metal complex dyes are used.

14. A process according to claim 13, wherein 1 : 2 chromium mixed complexes of azo dyes are used, which complexes contain a single sulfonic acid group.

15. A process according to any one of claims 9 to 11, wherein reactive dyes which contain at least two sulfonic acid groups are used in conjunction with 1 : 2 metal complex dyes.

**Revendications**

1. Hémiesters maléiques ou phtaliques de formule

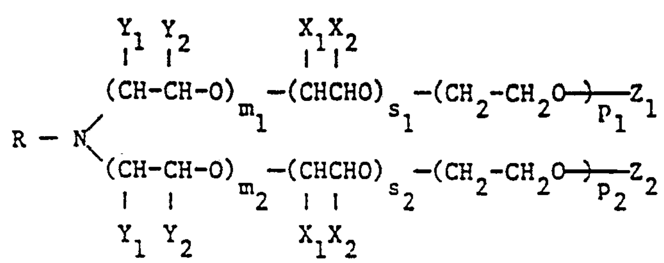

(1)

dans laquelle

R représente un radical aliphatique en $C_{16}$-$C_{24}$,

l'un des symboles $Y_1$ et $Y_2$ représente un atome d'hydrogène et l'autre un groupe phényle,

l'un des symboles $X_1$ et $X_2$ représente un atome d'hydrogène et l'autre un groupe méthyle,

l'un des symboles $Z_1$ et $Z_2$ représente un atome d'hydrogène et l'autre le radical de l'acide maléique ou le radical de l'acide phtalique,

$m_1$ et $m_2$ sont égaux à 0 ou 1, et

$s_1$, $s_2$, $p_1$ et $p_2$ sont des nombres entiers,

la somme de $s_1 + s_2$ allant de 5 à 12, et la somme de $p_1 + p_2$ de 5 à 30.

2. Hemiesters selon la revendication 1, caractérisés en ce que, dans la formule (1), R représente un radical alkyle ou alcényle en $C_{16}$-$C_{24}$.

3. Hémiesters selon la revendication 2, caractérisés en ce que, dans la formule (1), R représente un radical béhényle.

4. Hémiesters selon l'une des revendications 1 à 3, caractérisés en ce que, dans la formule (1), $m_1$ et $m_2$ sont tous deux égaux à 0 ou un seul de ces indices est égal à 1.

5. Hémiesters selon l'une des revendications 1 à 4, caractérisés en ce que, dans la formule (1), la somme $s_1 + s_2$ va de 5 à 10.

6. Hémiesters selon l'une des revendications 1 à 5, caractérisés en ce que, dans la formule (1), la somme $p_1 + p_2$ va de 8 à 25.

7. Hémiesters selon la revendication 1, caractérisés en ce qu'ils répondent à la formule

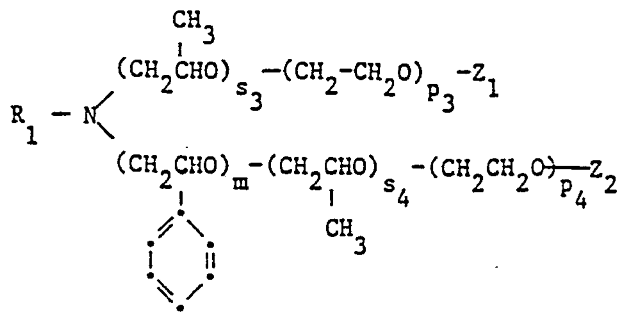

(2)

dans laquelle

$R_1$ représente un radical alkyle en $C_{16}$-$C_{24}$ ou alcényle en $C_{16}$-$C_{24}$,

l'un des symboles $Z_1$ et $Z_2$ représente l'hydrogène et l'autre le radical de l'acide maléique ou le radical de l'acide phtalique,

m est égal à 0 ou 1, et

$s_3$, $s_4$, $p_3$ et $p_4$ sont des nombres entiers,

la somme de $s_3 + s_4$ allant de 5 à 10 et la somme de $p_3 + p_4$ de 8 à 25.

8. Utilisation des hémiesters selon l'une des revendications 1 à 7 en tant que produits auxiliaires lors de la teinture de matières fibreuses contenant de la laine à l'aide de colorants anioniques.

9. Procédé pour la teinture de matières fibreuses contenant de la laine à l'aide de colorants anioniques, caractérisé en ce que l'on traite ces matières, avant ou durant la teinture, par une composition aqueuse contenant un hémiester de formule

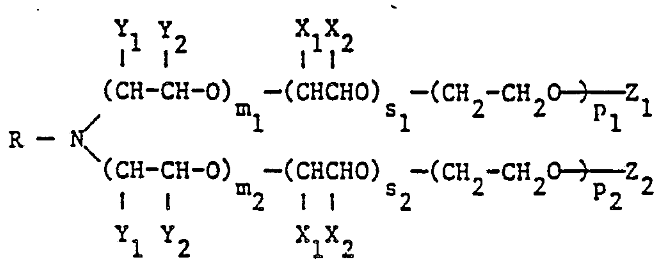

(1)

dans laquelle

R représente un radical aliphatique en $C_{16}$-$C_{24}$,

l'un des symboles $Y_1$ et $Y_2$ représente un atome d'hydrogène et l'autre un groupe phényle,

l'un des symboles $X_1$ et $X_2$ représente un atome d'hydrogène et l'autre un groupe méthyle,

l'un des symboles $Z_1$ et $Z_2$ représente un atome d'hydrogène et l'autre le radical de l'acide maléique ou le radical de l'acide phtalique,

$m_1$ et $m_2$ sont égaux à 0 ou 1, et

$s_1$, $s_2$, $p_1$ et $p_2$ sont des nombres entiers,

la somme de $s_1 + s_2$ allant de 5 à 12 et la somme de $p_1 + p_2$ de 5 à 30.

10. Procédé selon la revendication 9, caractérisé en ce que la composition contient en outre un produit d'addition de 30 à 200 moles d'oxyde d'éthylène sur 1 mole d'un monoalcool aliphatique en $C_{12}$-$C_{22}$ ou d'un alkylphénol contenant 4 à 12 atomes de carbone dans la partie alkyle.

11. Procédé selon l'une des revendications 9 et 10, caractérisé en ce que le bain de teinture contient la composition en une proportion de 0,5 à 3 % en poids, rapportée à la matière fibreuse.

12. Procédé selon l'une des revendications 9 à 11, caractérisé en ce que l'on utilise des colorants réactifs contenant au moins deux groupes acide sulfonique.

13. Procédé selon l'une des revendications 9 à 11, caractérisé en ce que l'on utilise des colorants à complexe métallique 1 : 2.

14. Procédé selon la revendication 13, caractérisé en ce que l'on utilise des complexes mixtes de chrome 1 : 2 de colorants azoïques, ces complexes ne contenant qu'un seul groupe acide sulfonique.

15. Procédé selon l'une des revendications 9 à 11, caractérisé en ce que l'on utilise des colorants réactifs contenant au moins deux groupes acide sulfonique avec des colorants à complexe métallique 1 : 2.